# EUROPEAN PATENT APPLICATION

(11) **EP 4 818 999 A1**
(43) Date of publication of application: **07.10.2026**
(21) Application number: 24897074.1
(22) Date of filing: 30.09.2024
(51) Int. Cl.: G06Q 10/10

(54) **INFORMATION PROCESSING SYSTEM AND INDEX CALCULATION METHOD**

(30) Priority: 30.11.2023 JP 2023203326
(71) Applicant: Hitachi, Ltd., Tokyo 100-8280 (JP)
(72) Inventor: AMANO, Koji, Tokyo 100-8280 (JP); MACHIDA, Yoshihiro, Tokyo 100-8280 (JP); NAGAOKA, Haruko, Tokyo 100-8280 (JP); YAMAMOTO, Hiroki, Tokyo 100-8280 (JP); MATSUMOTO, Keiji, Tokyo 100-8280 (JP)
(74) Representative: Mewburn Ellis LLP
(86) International application number: PCT/JP2024/035009
(87) International publication number: WO 2025/115384

(57) **Abstract**

This information processing system comprises: an auxiliary storage device 1300 as a storage unit for storing a data set 400 that is related to calculation of a prescribed index, and has included therein, in association with one another, data of an input value necessary for computing the prescribed index, at least one structure of an expression for computing the prescribed index, and data of an output value which is a computing result of the prescribed index; and a CPU 1100 as a processing unit capable of outputting, on the basis of the data set, information related to the input value, the expression, or the output value, which are each associated with the prescribed index. With this configuration, the information processing system can manage the reliability of the index.

## Description

### Technical Field

The present invention relates to an information processing system and an index calculation method.

### Background Art

One technique for efficiently managing data is described in JP 2023-57944 A (PTL 1). The publication includes descriptions stating, "An information processing apparatus, an information processing method, and an information processing program that realize simplification of input work in creation of forms, application documents, and the like are provided."; and "In a low-code development Web server apparatus 2, an action setting unit 28 sets a storage area definition indicating, among areas in a display screen, a storage area to be a storage target, a control setting unit 24 sets a control definition indicating a control that is at least a display item or an operation button to be arranged in the storage area set by a storage area setting unit, a dynamic restoration target setting unit 26 sets, as a dynamic restoration target control definition, a control for which a value is dynamically updated and displayed at the time of next and subsequent screen displays among the controls, and a storage control unit 27 associates the storage area definition, the control definition, and the dynamic restoration target control definition as child elements of the storage area definition and stores the storage area definition, the control definition, and the dynamic restoration target control definition in a storage unit in a hierarchical manner".

### Citation List

### Patent Literature

PTL 1: JP 2023-57944 A

### Summary of Invention

### Technical Problem

There are cases in which computation is performed using input data to calculate a target value. In such cases, verifying the calculated value has been difficult. For example, when a piece of data computed from a plurality of pieces of data is used, confirming how the value has been computed is difficult.

However, when indexes such as management indexes or greenhouse gas (GHG) emission indexes are calculated, a plurality of computing methods may exist for the same index. For example, if the types and number of underlying data are sufficient, the value of the index can be computed accurately, but even if the types and number of underlying data are sufficient, the value of the index can be obtained as an approximate value with a certain degree of accuracy. Further, even for the same index, regulations required for a computing method may differ depending on a use destination. As described above, even for the same index, values may differ depending on a calculation process, and reliability may also differ, and therefore there is a demand for making the calculation process of the index retrospectively verifiable, that is, for achieving traceability with respect to the calculation process of the index, thereby enabling management of the reliability of the index.

PTL 1 does not take the above-described problems into consideration.

Accordingly, an object of the present invention is to manage reliability of an index.

### Solution to Problem

In order to achieve the above object, one typical information processing system of the present invention includes: a storage unit for storing a data set that is related to calculation of a prescribed index, and has included therein, in association with one another, data of an input value necessary for computing the prescribed index, at least one structure of an expression for computing the prescribed index, and data of an output value which is a computing result of the prescribed index; and a processing unit capable of outputting, on the basis of the data set, information related to the input value, the expression, or the output value, which are associated with the. prescribed index.

Further, one typical index calculation method of the present invention in which an information processing system refers to a data set relating to calculation of a prescribed index, the data set having associated therewith data of an input value necessary for computing the prescribed index, at least one structure of an expression for computing the prescribed index, and data of an output value which is a computing result of the prescribed index, the index calculation method comprising: acquiring the input value; executing processing indicated by the expression; using, as output values, an intermediate result and/or a final result regarding execution of the processing; and saving, in association, an acquisition result of the input value, an execution result of the processing, and output values as the intermediate result and/or final result.

### Advantageous Effects of Invention

According to the present invention, reliability of an index can be managed. Problems, configurations, and effects other than those described above will be clarified by the following description of embodiments.

### Brief Description of Drawings

[FIG. 1] FIG. 1 is an explanatory diagram of an information processing system of Embodiment 1.
[FIG. 2] FIG. 2 is a configuration diagram of the information processing system.
[FIG. 3] FIG. 3 is a configuration diagram of a computer capable of operating as the information processing system.
[FIG. 4] FIG. 4 is a specific example of data stored in a database.
[FIG. 5] FIG. 5 is an explanatory diagram of data input/output.
[FIG. 6] FIG. 6 is a specific example of a data set.
[FIG. 7] FIG. 7 is a flowchart illustrating a processing procedure of the information processing system.
[FIG. 8] FIG. 8 is an explanatory diagram of processing in a case of reusing an existing computing result (Part 1).
[FIG. 9] FIG. 9 is an explanatory diagram of processing in a case of reusing an existing computing result (Part 2).
[FIG. 10] FIG. 10 is a specific example of a data input screen.
[FIG. 11] FIG. 11 is a flowchart of input control.
[FIG. 12] FIG. 12 is a specific example of display of an input value.
[FIG. 13] FIG. 13 is an explanatory diagram of comparison of the same index.
[FIG. 14] FIG. 14 is a flowchart illustrating comparison processing of the same index.
[FIG. 15] FIG. 15 is a specific example of display of a plurality of indexes.
[FIG. 16] FIG. 16 is a flowchart illustrating a processing procedure of display processing of a plurality of indexes.
[FIG. 17] FIG. 17 is an explanatory diagram of display of company information.
[FIG. 18] FIG. 18 is a flowchart illustrating a procedure of structure display processing.
[FIG. 19] FIG. 19 is an explanatory diagram of data tracing.
[FIG. 20] FIG. 20 is a flowchart illustrating a procedure of trace display processing of data.
[FIG. 21] FIG. 21 is an explanatory diagram of a case of tracing a flow of energy.
[FIG. 22] FIG. 22 is an explanatory diagram of display of use state statistics of a data set.
[FIG. 23] FIG. 23 is an explanatory diagram of an example in which usage-based information for monetization is calculated and displayed from a use amount of a data set.
[FIG. 24] FIG. 24 is a specific example of a data set relating to equipment basic unit calculation.
[FIG. 25] FIG. 25 is a flowchart of processing for calculating a GX index.

### Description of Embodiments

Embodiments will be described below with reference to the drawings.

### Embodiment 1

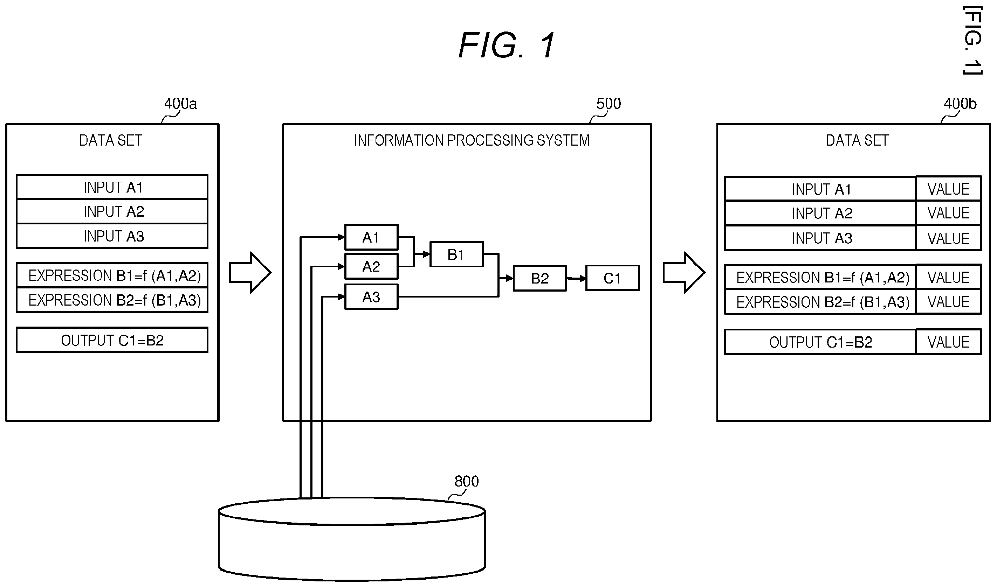

FIG. 1 is an explanatory diagram of an information processing system of Embodiment 1. An information processing system 500 is a system that calculates an index. The information processing system 500 uses a data set 400a when calculating the index.

The data set 400a is a data set relating to calculation of the index, and associates data of an input value required for computing the index, at least one structure of an expression for computing the index, and data of an output value that is a computing result of the index.

As one example, the data set 400a specifies three pieces of data A1-A3 as inputs. The data set also specifies B1 and B2 as expression structures. B1 is a function of inputs A1 and A2. B2 is a function of B1 and A3. The data set 400a also specifies use of B2 for an output C1. C1 is a value of the index obtained using the data set 400a.

The information processing system 500 calculates the index based on the data set 400a. Specifically, the information processing system 500 acquires inputs A1-A3 from a database 800, performs computation according to expressions B1-B2, and obtains C1.

The information processing system 500 manages, in association, values of inputs A1-A2, expressions B1-B3, and a value of output C1. In other words, the information processing system 500 can output a computing result as a data set 400b obtained by adding values to the data set 400a.

As described above, the information processing system 500 does not output only a computing result of the index, but can manage, in association, input values and expressions used for computation of the index and can output the input values and the expressions together with the computing result of the index. Therefore, traceability can be achieved for a calculation process of the index, the index can be verified, and reliability can be managed. In other words, the information processing system 500 can support traceability of data.

Here, inputs, expressions, and outputs in the data set 400a and the data set 400b are preferably described in a format that can be easily read by humans as well. The reason is that direct reading by humans is assumed at a time of verification. In the present embodiment, expressions are assumed to be described in infix notation.

Further, input values are preferably subjected to restrictions for maintaining reproducibility. For example, if settings are made such that a latest value is used as an input value, confirming data at which point in time has been used when later verification is performed becomes difficult. Therefore, for example, a type of the input value is preferably set such that reproduction and verification are facilitated, by specifying a time.

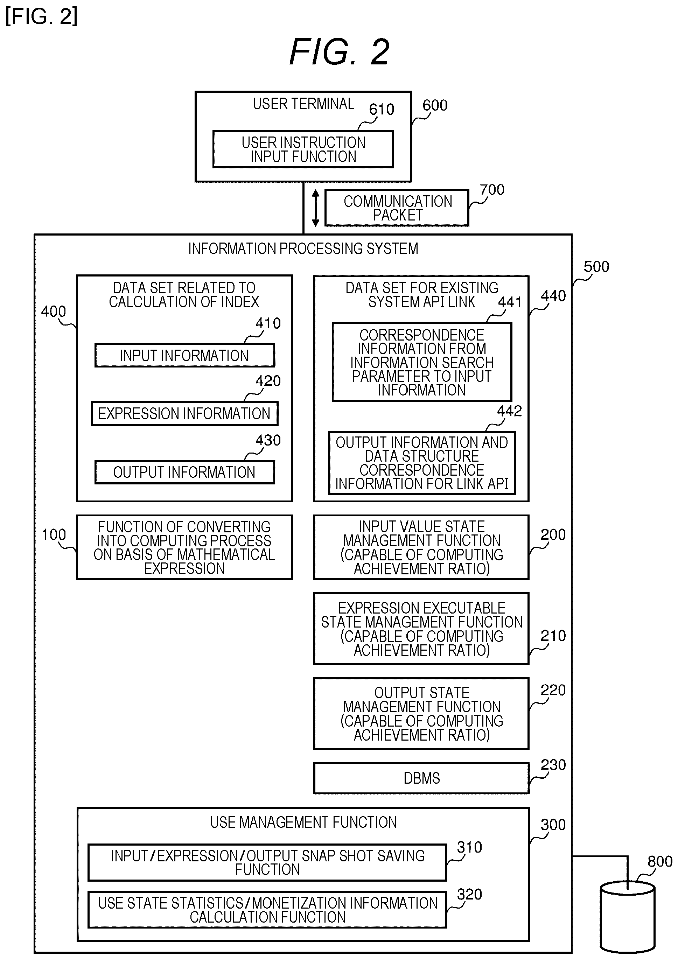

FIG. 2 is a configuration diagram of the information processing system 500. The information processing system 500 is communicatively connected to a user terminal 600 and can transmit and receive a communication packet 700 to and from the user terminal 600. The user terminal 600 has a user instruction input function 610. The user instruction input function 610 accepts a user operation and transmits an instruction indicated by the operation to the information processing system 500. The instructions include storage of a data set 400 related to calculation of an index, execution of calculation of the index, output of a computing result or an intermediate result, and the like.

The information processing system 500 has the data set 400 related to calculation of the index, a data set 440 for an existing system application programming interface (API) link, a function 100 of converting into a computing process on the basis of a mathematical expression, an input value state management function 200, an expression executable state management function 210, an output state management function 220, a database management system (DBMS) 230, and a use management function 300.

As already described, the data set 400 related to calculation of the index includes input information 410 that is information relating to an input, expression information 420 that is information relating to an expression, and output information 430 that is information relating to an output.

The data set 440 for an existing system API link has correspondence information 441 from an information search parameter to input information and output information and data structure correspondence information 442 for a link API.

The correspondence information 441 from an information search parameter to input information is data indicating a correspondence relationship between identification information of data acquirable from outside and identification information for uniquely specifying data within the data set 400. One example of data acquirable from outside is data acquirable from the database 800.

The output information and data structure correspondence information 442 for a link API is data indicating a correspondence relationship between identification information for uniquely specifying data within the data set 400 and a data format used by an output destination of the index.

The function 100 of converting into a computing process on the basis of a mathematical expression is a function of converting the expression information 420 into a notation suitable for processing by a program. For example, the function 100 performs processing for converting the expression information 420 described in infix notation into reverse Polish notation.

The input value state management function 200 manages, for each of the input values indicated by the input information 410 of the data set 400, whether a state in which acquisition from the database 800 is possible is established. Further, the input value state management function 200 can calculate, as an achievement ratio, a ratio indicating how many of the input values are acquirable when the index is computed by a certain method.

The expression executable state management function 210 manages, for each of the expressions indicated by the expression information 420 of the data set 400, whether a state in which computation can be executed is established. Further, the expression executable state management function 210 can compute, as an achievement ratio, a ratio indicating how many of the plurality of expressions included in the data set are computable.

The output state management function 220 is a function that executes computation of expressions and manages states relating to final output and intermediate output. The final output is output of the index indicated by the output information 430 of the data set 400. The intermediate output is output such as acquired input values and intermediate progress of computation. The output state management function 220 can compute, as an achievement ratio, a ratio indicating how many outputs among the final output and the intermediate output are outputtable.

The DBMS 230 is software that manages access to the database 800.

The use management function 300 is a function relating to use of the index computed based on the data set 400. The use management function 300 has an input/expression/output snap shot saving function 310 and a use state statistics/monetization information calculation function 320.

The input/expression/output snap shot saving function 310 is a function of saving, in association with the data set 400, values acquired for inputs, computing results of expressions, and values of the output index and intermediate progress. The snap shot corresponds to the data set 400b of FIG. 1.

The use state statistics/monetization information calculation function 320 is a function of managing use results of the output index value and the snap shot and, based on the use results, estimating the output index value and value of the snap shot.

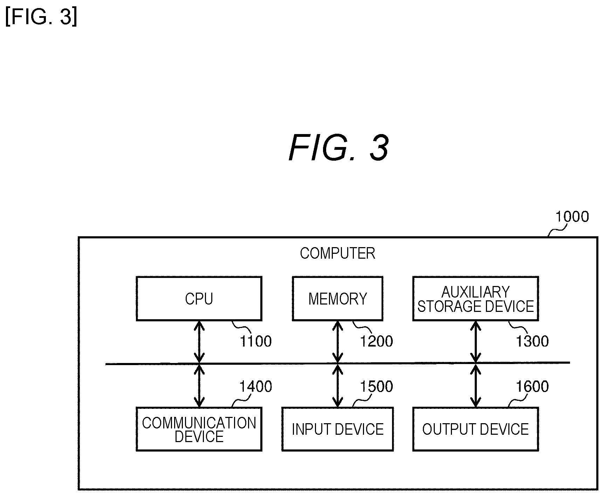

FIG. 3 is a configuration diagram of a computer capable of operating as the information processing system 500. A computer 1000 has a central processing unit (CPU) 1100, a memory 1200, an auxiliary storage device 1300, a communication device 1400, an input device 1500, and an output device 1600.

The CPU 1100 causes the computer 1000 to operate as the information processing system 500 by loading a program into the memory, which is a main storage device, and executing the program.

Further, the CPU 1100 operates as processing that implements the function 100 of converting into a computing process on the basis of a mathematical expression, the input value state management function 200, the expression executable state management function 210, the output state management function 220, the DBMS 230, and the use management function 300.

The auxiliary storage device 1300 is, for example, a hard disk drive. The auxiliary storage device 1300 stores the data set 400 and the data set 440. Further, the auxiliary storage device 1300 can store snap shots acquired by the use management function 300 and other arbitrary data.

The communication device 1400 is a communication interface that performs communication with the user terminal 600 and the database 800.

The input device 1500 is a keyboard or a pointing device. The output device 1600 is a display or the like.

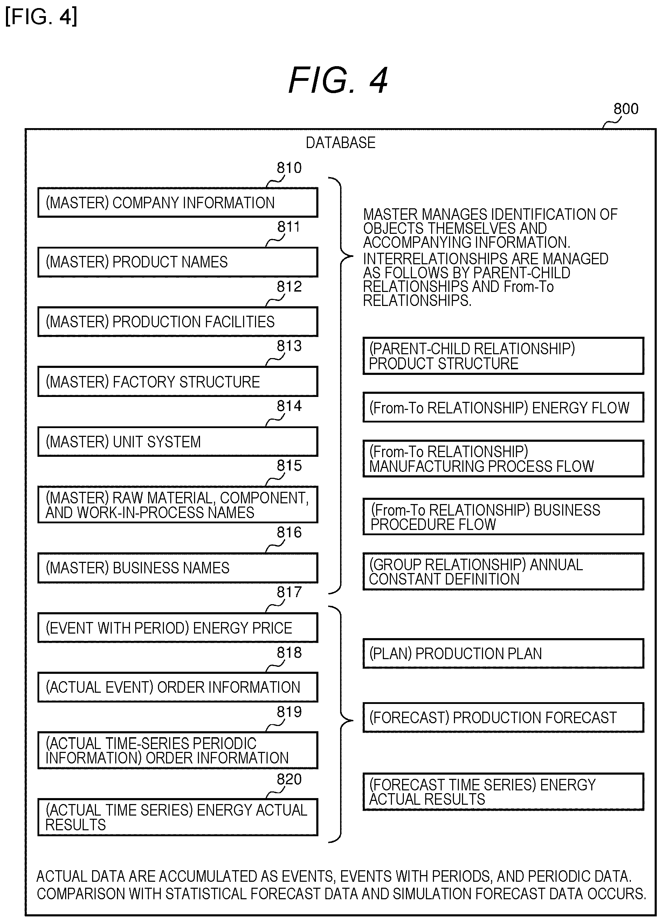

FIG. 4 is a specific example of data stored in the database 800.

The database 800 stores, as master data, company information 810, product names 811, production facilities 812, factory structures 813, unit systems 814, raw material/component/work-in-process names 815, business names 816, and the like.

The master data manage identification of objects themselves and accompanying information. Interrelationships between data are managed by parent-child relationships and From-To relationships. For example, a product structure can be indicated by a parent-child relationship in which the product name 811 is a parent and the raw material/component/work-in-process name 815 is a child. Further, energy flows, manufacturing process flows, business procedure flows, and the like can be indicated by From-To relationships. Further, annual constant definitions can also be indicated by group relationships.

The database 800 stores, as actual data, energy prices 817, order information 818 as events, order information 819 as time-series periodic information, energy actual results 820 as time series, and the like.

The actual data are accumulated as events with periods or as periodic data. For example, the order information 818 is data for managing orders that occurred during a certain period as individual events, and the order information 819 is data for managing transitions of cumulative totals of orders for each period.

Comparison of the actual data with statistical forecast data and simulation forecast data is possible. For example, a production plan can be formulated as a schedule from orders that have occurred. From the order information 819, which is actual data, orders that will occur in the future can be predicted, and production can be predicted from the predicted orders. Further, from the energy actual results 820, which are actual data, fluctuations in future energy actual results can be predicted. The predicted various data can subsequently be compared with data obtained later as actual results.

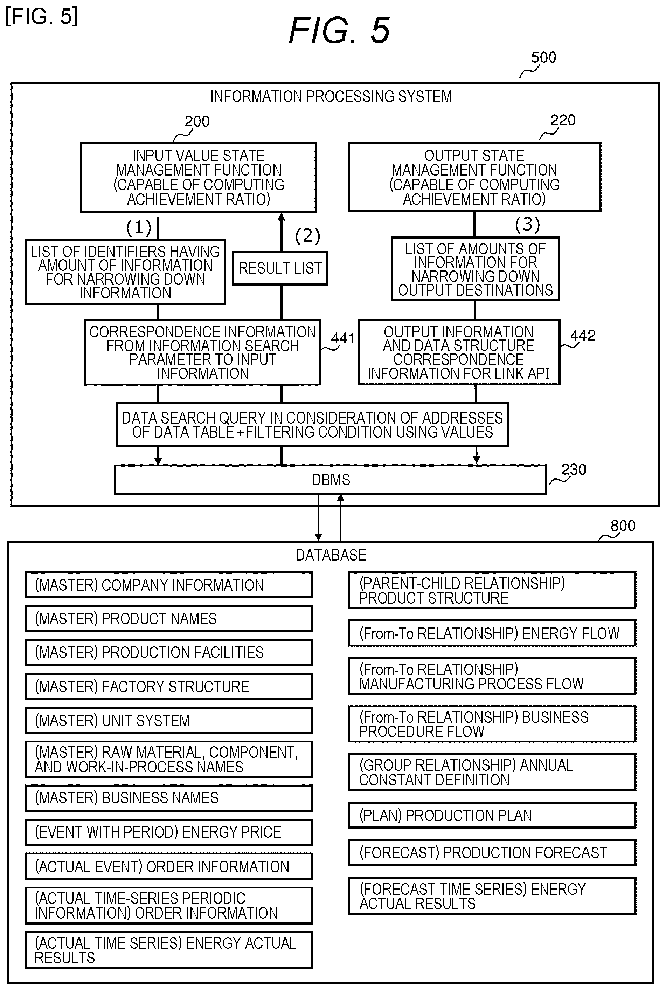

FIG. 5 is an explanatory diagram of data input/output. Data input/output is performed according to the following procedures (1) to (3).
(1) The input value state management function 200 of the information processing system 400 sends, to the DBMS 441, an instruction for acquiring a target input value by using a "list of identifiers having an amount of information for narrowing down information", "correspondence information 441 from an information search parameter to input information", and a "data search query in consideration of addresses of a data table + filtering condition using a value".
(2) The input value state management function 200 receives, as a "result list", information acquired by the DBMS 230 and converted by using the "correspondence information 441 from an information search parameter to input information" and the "data search query in consideration of addresses of a data table + filtering condition using a value".
(3) The output state management function 220 sends, to the DBMS 230, an instruction to store a target output value in the database 800 by using information of the output value, a "list of amounts of information for narrowing down output destinations", "output information and data structure correspondence information 442 for a link API", and a "data search query in consideration of addresses of a data table + filtering condition using a value".

In this manner, the DBMS 230 acquires information from the database 800 and stores information based on instructions from the input value state management function 200 and the output state management function 220.

The correspondence information 441 and the correspondence information 442 included in the information processing system 500 indicate correspondence relationships between identification information of data in the database 800 and identification information for uniquely specifying data within the data set 400. The information processing system 500 can convert names of data used by the data set 400 into identification information of data used by the database 800 by referring to the correspondence information 441 and the correspondence information 442. The identification information of data used by the database 800 corresponds to addresses of a data table. Therefore, by using a filtering condition using a "data search query in consideration of addresses of a data table + value", the DBMS can access data in the database 800.

Names of data used by the data set 400 can be used as a "list of identifiers having an amount of information for narrowing down information" and a "list of amounts of information for narrowing down output destinations" and are stored in the auxiliary storage device 1300.

Conventional relational databases link data by relations (addresses of tables). Under this configuration, data are acquired on the premise that system design is known. Therefore, when correspondence relationships between data are undecided or have been changed, data cannot be acquired, and flexible design changes cannot be accommodated.

In contrast, in the system disclosed in the embodiment, reserved words that can identify types of data managed in the database as unique meanings are managed, and by combining the reserved words, uniqueness of meaning and a source of data for data of the entire data set can be ensured.

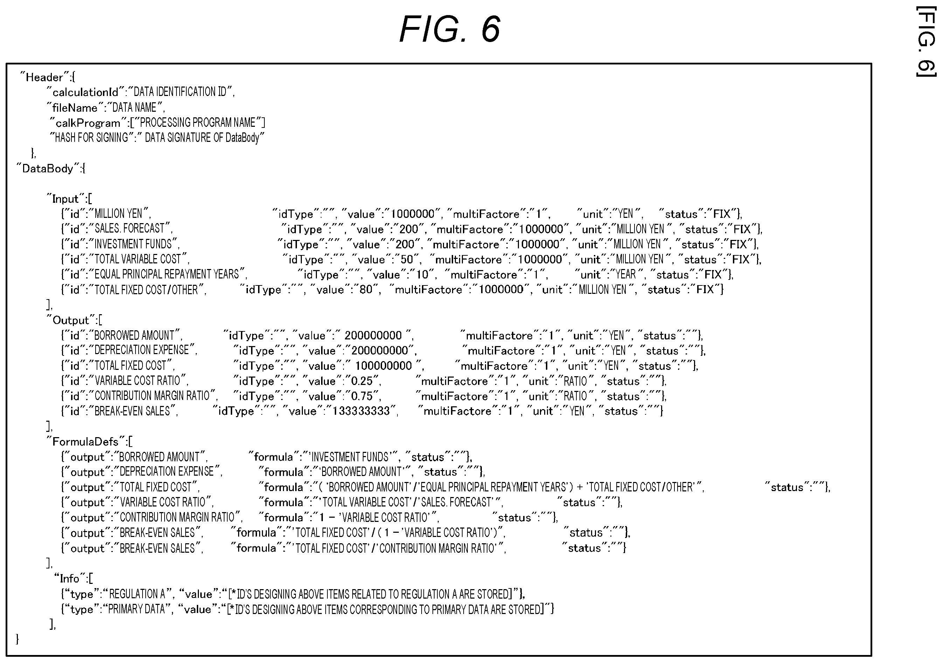

FIG. 6 is a specific example of a data set.

The data set 400 shown in FIG. 6 is one example of a data set for calculating a management index.

The data set 400 shown in FIG. 6 specifies, as input values, "sales forecast", "total variable cost", and the like. The data set 400 also specifies, as output values, "variable cost ratio", "break-even sales", and the like. Further, among contents of processing performed using the input values, the data set 400 specifies "total variable cost/sales forecast" as an expression for calculating "variable cost ratio" and specifies "total fixed cost/(1 - variable cost ratio)" and "total fixed cost/contribution margin ratio" as expressions for calculating "break-even sales".

As shown in FIG. 6, the data set 400 indicates a type of data of an input value, content of processing performed using the input value, and a type of data of an output value.

When data of a type specified as an input value are obtained, the information processing system 500 executes processing using the data and obtains an output value.

Further, the information processing system 500 manages, in association, a value of data used as an input value, content of executed processing, and a value of an output value obtained as an execution result of the processing.

Here, in the data set 400 of FIG. 6, one row is assigned to each data type for input values, output values, and expressions. Therefore, the data set 400 can also be easily read directly by humans.

Further, when data specified as an input value are obtained, "status" included in a row of the input value is set to "FIX", and a value used as the input value is retained as "value". Rows of expressions and outputs can likewise have "status" and "value".

As described above, the data set 400 can store processing results and processing progress conditions inside the data set 400. The data set 400 storing processing results and progress conditions is managed as a snap shot separately from the original data set 400.

Further, computing results of expressions can also be used as input values. Among input values, an input value acquired from outside is referred to as primary data. Further, an input value obtained from primary data is referred to as secondary data. Note that not only secondary data directly obtained from primary data but also data obtained from secondary data are regarded as a type of secondary data because the data obtained from secondary data are indirectly obtained from primary data.

Further, output values may also include data of the same type for which at least one of an input value and an expression differs. In FIG. 6, for "break-even sales", two rows having different expressions for calculation are present.

An electronic signature may be generated from the data set 400 storing processing results and progress conditions and may be added to the data set 400.

In FIG. 6, the body is electronically signed, and a hash for signing, which is a verifiable code, is embedded in the header.

Further, as information, correspondence between items and regulations and identification of items that are primary data are embedded in the body.

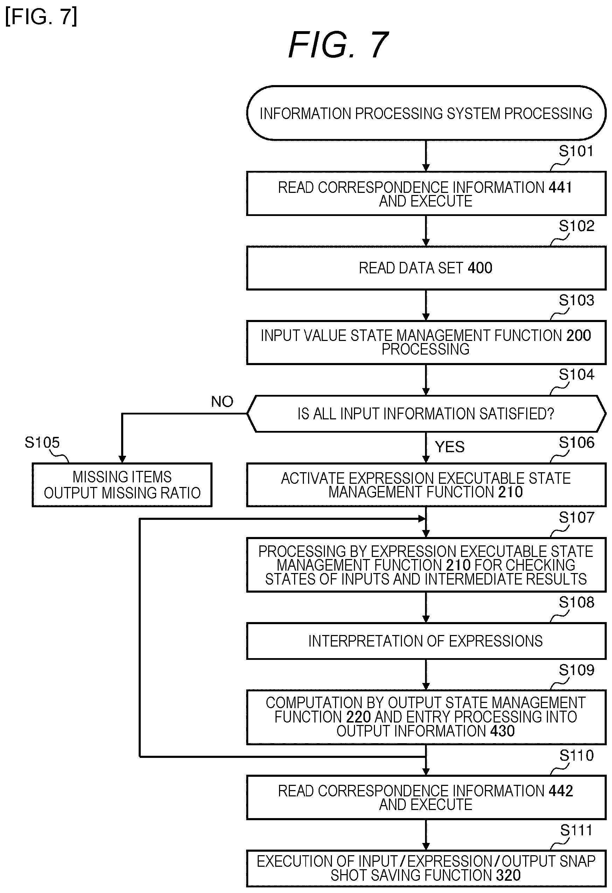

FIG. 7 is a flowchart illustrating a processing procedure of the information processing system. The information processing system 500 sequentially executes the following steps S101 to S108.

### Step S101

The information processing system 500 reads the correspondence information 441 from an information search parameter to input information and executes processing for converting data acquirable from the database 800 into data of identification information used in the data set 400. Thereafter, the process proceeds to Step S102.

### Step S102

The information processing system 500 reads the data set 400. Thereafter, the process proceeds to Step S103.

### Step S103

The information processing system 500 performs processing by the input value state management function 200. By the processing, whether all input information, which is data used as input values, is complete is determined. Thereafter, the process proceeds to Step S104.

### Step S104

The information processing system 500 determines whether all input information is satisfied. If all input information is satisfied (Step S104; Yes), the process proceeds to Step S106. If any input information is not satisfied (Step S104; No), the process proceeds to Step S105.

### Step S105

The information processing system 500 uses unsatisfied input information as missing items, outputs a ratio of the missing items to all input information as a missing ratio, and terminates the processing.

### Step S106

The information processing system 500 activates the expression executable state management function 210 and proceeds to Step S107.

### Step S107

The information processing system 500 executes, by the expression executable state management function 210, processing for checking states of inputs and intermediate results.

Thereafter, the process proceeds to Step S108.

### Step S108

The information processing system 500 interprets expressions by the function 100 of converting into computing process on the basis of mathematical expressions and proceeds to Step S109.

### Step S109

The information processing system 500 performs computation by the output state management function 220 and entry into the output information 430. The entered output information 430 may also be used as an input as secondary data. Therefore, Steps S107 to S109 are repeated until all output information that can be computed from the obtained input information has been entered. Thereafter, the process proceeds to Step S110.

### Step S110

The information processing system 500 reads the correspondence information 442 and executes processing. As a result, output values are output as data in formats suitable for output destinations. Thereafter, the process proceeds to Step S111.

### Step S111

The information processing system 500 executes the input/expression/output snap shot saving function 310. As a result, data associating used input values, processing contents and results of expressions, and calculated output values are accumulated as a snap shot.

In FIG. 7, computation is started when all input information is satisfied, but a configuration may be adopted in which, when part of the input information has been obtained, computation is started within a range computable from the obtained input information. In this case, intermediate progress of the computation can be output together with missing items and a missing ratio.

FIG. 7 illustrates processing for executing computation using data managed by the database 800. Thereafter, when data of the same type become necessary, the processing of FIG. 7 may be executed again, but it is also possible to refer to and reuse an existing computing result. In this manner, by reusing an existing computing result, value of the existing computing result can be increased.

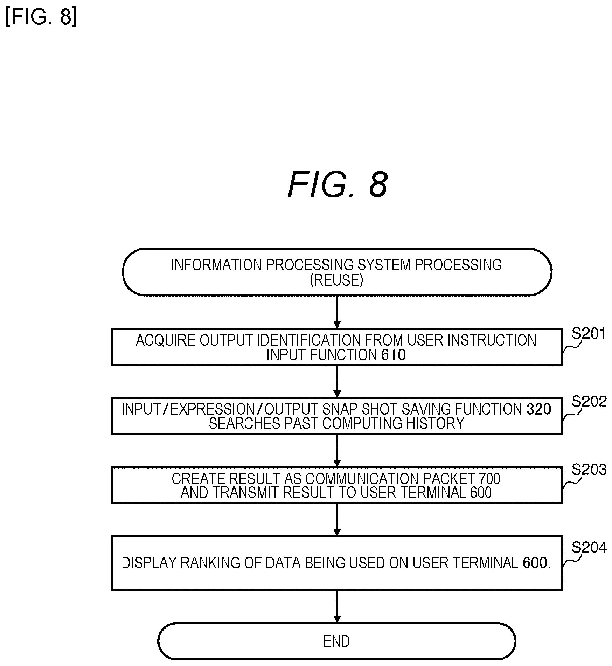

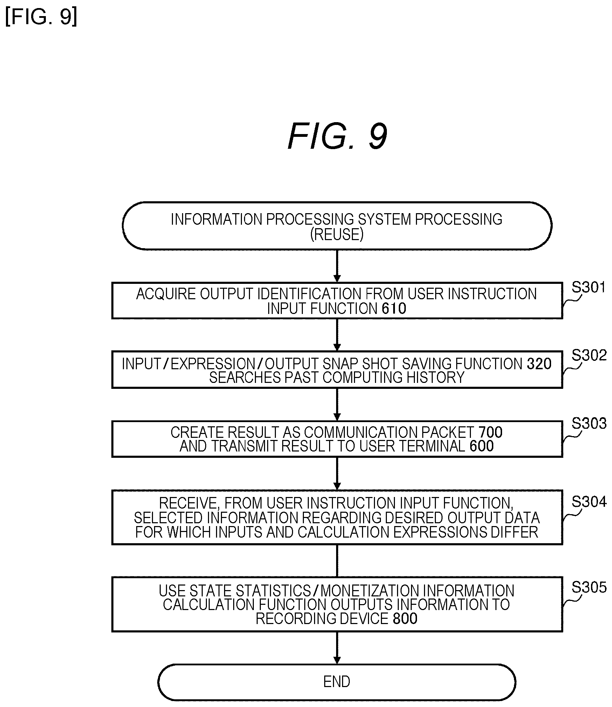

FIGS. 8 and 9 are explanatory diagrams of processing in a case of reusing an existing computing result.

In the processing of FIG. 8, the user terminal 600 and the information processing system 500 sequentially execute the following steps S201 to S204.

### Step S201

The user terminal 600 obtains, from the user instruction input function 610, identification of a desired output. Thereafter, the process proceeds to Step S202.

### Step S202

The input/expression/output snap shot saving function 310 of the information processing system 500 searches a past computing history. Thereafter, the process proceeds to Step S203.

### Step S203

The information processing system 500 creates a result as the communication packet 700 and transmits the result to the user terminal 600. Thereafter, the process proceeds to Step S204.

### Step S204

The information processing system 500 causes the user terminal 600 to display a ranking of data used as reference destinations.

In the processing of FIG. 9, the user terminal 600 and the information processing system 500 sequentially execute the following steps S301 to S305.

### Step S301

The user terminal 600 obtains, from the user instruction input function 610, identification of a desired output. Thereafter, the process proceeds to Step S302.

### Step S302

The input/expression/output snap shot saving function 310 of the information processing system 500 searches a past computing history. Thereafter, the process proceeds to Step S303.

### Step S303

The information processing system 500 creates a result as the communication packet 700 and transmits the result to the user terminal 600. Thereafter, the process proceeds to Step S304.

### Step S304

The user terminal 600 receives, by the user instruction input function 610, selected information regarding data for which a desired output is the same and at least one of an input and a calculation expression is different. Thereafter, the process proceeds to Step S305.

### Step S305

The use state statistics/monetization information calculation function 320 of the information processing system 500 outputs information to the database 800 and terminates the processing.

A use case will be described below in which a data input screen is automatically generated from the data set 400 relating to calculation of the index, an item whose status has been converted from "default value" to "entered" is detected, and an evaluation is sent back to a user.

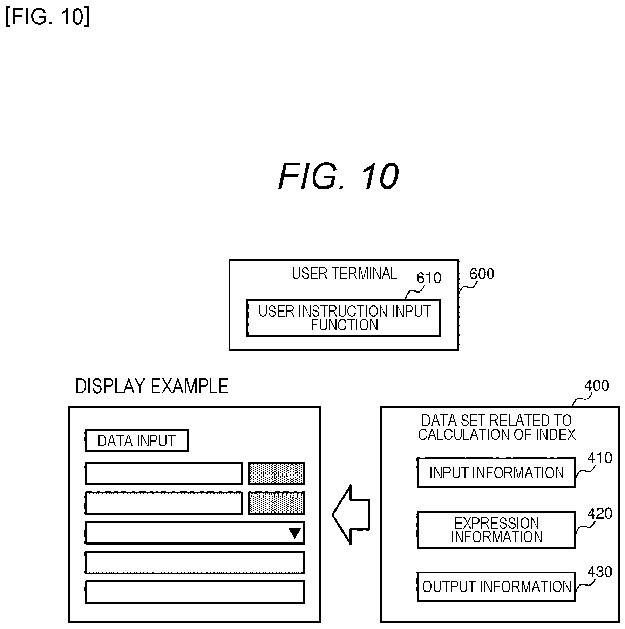

FIG. 10 is a specific example of a data input screen. The user instruction input function 610 of the user terminal 600 reads the data set 400 relating to calculation of the index and generates a data input screen from the data set 400. For example, the user instruction input function 610 generates input fields for input values included in the data set 400. The input fields may accept text input or may be pull-down menus. Similarly, the user instruction input function 610 can display expressions and outputs and can accept changes and the like. A default value is displayed in each input field, and the default value is changeable according to designation by a user.

Input values for index calculation are not necessarily limited to information already available. At that time, if fields are left blank or filled with zeroes, index computation may cause an error in some cases. Therefore, the present system generates an input screen reflecting default values so that information to be input can be increased while checking which item, when improved, changes the index.

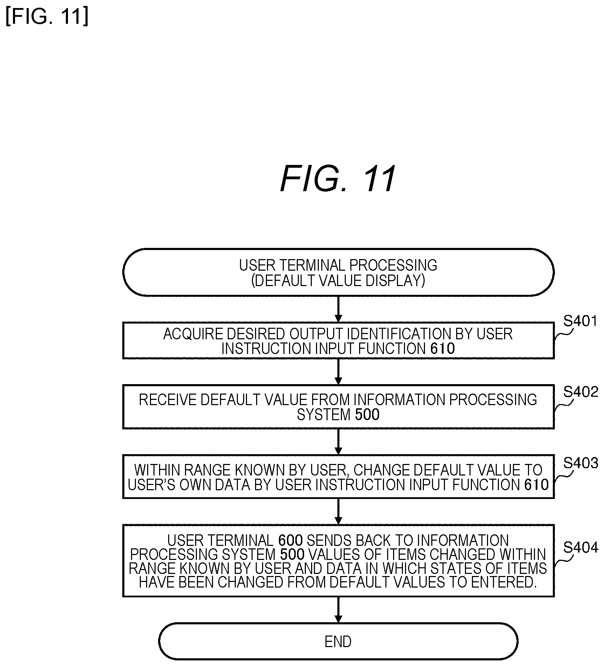

FIG. 11 is a flowchart of input control. The user terminal 600 sequentially executes the following steps S401 to S404.

### Step S401

Identification information of a desired output is obtained by the user instruction input function 610. Thereafter, the process proceeds to Step S402.

### Step S402

The user instruction input function 610 receives a default value from the information processing system 500. Thereafter, the process proceeds to Step S403.

### Step S403

The user instruction input function 610 accepts input from a user and changes a default value to an input value. Thereafter, the process proceeds to Step S404.

### Step S404

The user terminal 600 sends back to the information processing system 500 values of items changed within a range known by the user and data in which states of the items have been changed from default values to entered, and terminates the processing.

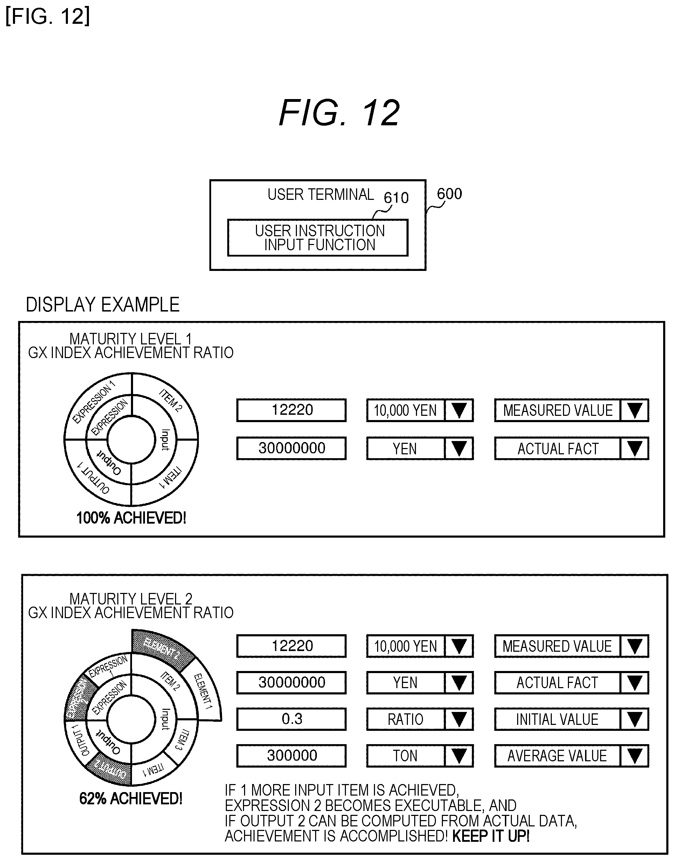

FIG. 12 is a specific example of display of input values.

For different computing methods for obtaining the same index, the information processing system 500 can set stages according to the number of required input values, obtain the index by a computing method that satisfies the required input values at a current time, and provide information of input values required for a computing method of a next stage.

FIG. 12 is an example of calculating an index of green transformation (GX). Maturity level 1 corresponds to a method for obtaining a GX index with a relatively small number of inputs. Maturity level 2 corresponds to a method for obtaining a GX index using more inputs than maturity level 1. It is assumed that, as the maturity level increases, the number of required inputs increases and accuracy of an obtained index increases, and it is assumed that raising the maturity level as appropriate is required.

In FIG. 12, all inputs necessary for calculation of the GX index at maturity level 1 have been obtained, and a maturity level 1 GX index achievement ratio is 100%. For maturity level 2, which is the next stage, inputs are insufficient, and a maturity level 2 GX index achievement ratio is 62%. As shown in the processing of FIG. 11, because a state for an item for which input has been performed is changed from "default value" to "entered", a ratio achieved by the input can be computed by using, as a denominator, the total number of inputs for index computation and by using, as a numerator, the number of items for which the status has changed to "entered".

Processing capable of selecting a plurality of results computed for the same index and displaying differences among the plurality of results will be described below. In particular, elements displayable in time series will be described.

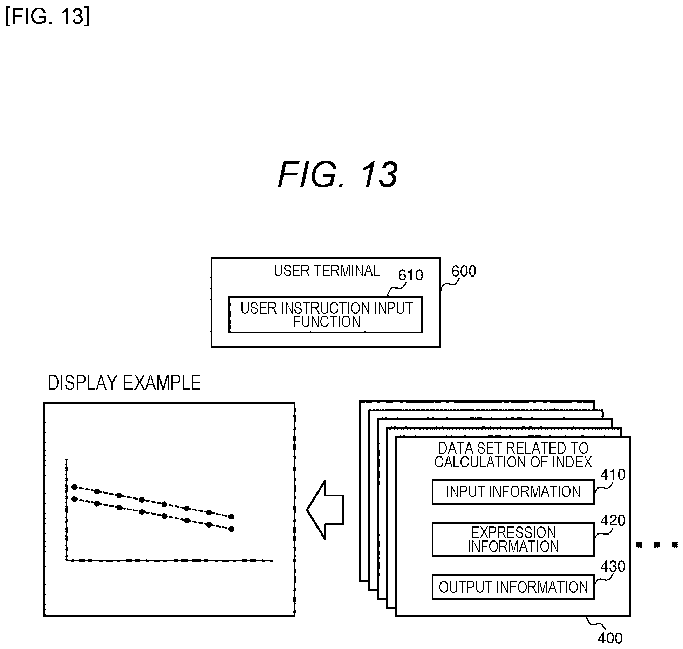

FIG. 13 is an explanatory diagram of comparison of the same index. For the same output information, different values of the same index can be obtained by performing computation using, for example, different times, different inputs, and different expression information. FIG. 13 illustrates an example of a screen for displaying and comparing the plurality of values in time series. Note that, for each of a plurality of indexes, different values of time, input, expression information, and the like can be obtained.

For a GX index, due to changes in regulations and policies of respective organizations, cases occur in which an expression for the same output information and an input to the expression differ. Therefore, there is a demand for searching past evidence information from the output information 430, plotting a plurality of pieces of data for comparison, and displaying differences.

Further, a function can be provided for displaying, by selecting output information, a snap shot indicating details of the output, and a function can be provided for extracting, by selecting outputs to be compared, portions of differences in inputs and expressions between the selected outputs and displaying the portions of differences to a user.

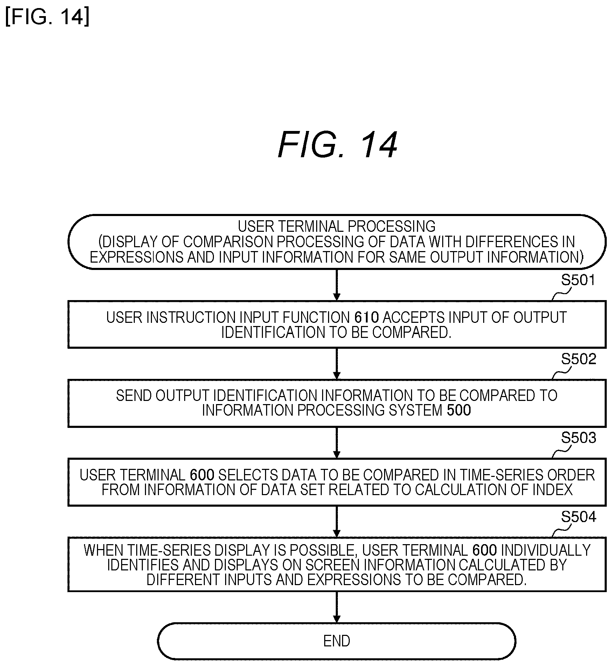

FIG. 14 is a flowchart illustrating comparison processing of the same index. The comparison processing of the same index includes the following steps S501 to S504.

### Step S501

The user instruction input function 610 of the user terminal 600 accepts input of identification information of an output to be compared. Thereafter, the process proceeds to Step S502.

### Step S502

The user instruction input function 610 sends the identification information of an output to be compared to the information processing system 500. Thereafter, the process proceeds to Step S503.

### Step S503

The user terminal 600 selects, in time-series order, data to be compared from information of a data set relating to calculation of the index. Thereafter, the process proceeds to Step S504.

### Step S504

When time-series display is possible, the user terminal 600 individually identifies and displays on a screen information calculated by different inputs and expressions to be compared, and terminates the processing.

Processing capable of selecting a plurality of indexes and displaying the plurality of indexes in a series will be described below.

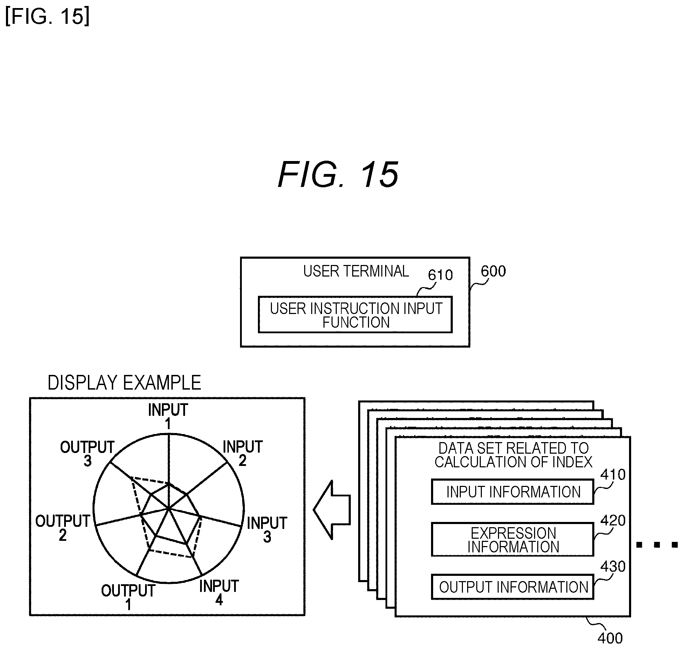

FIG. 15 is a specific example of display of a plurality of indexes. Because a GX index is evaluated by indexes from a plurality of viewpoints, it is necessary to have an overview of comprehensive results of various indexes.

In FIG. 15, a plurality of indexes can be checked by plotting various indexes on a radar chart.

In FIG. 15, inputs 1-4 and outputs 1-3 are shown as axes of the radar chart. Further, two patterns of inputs, outputs, and the like are displayed by a solid line and a broken line so as to be comparable. By comparing the pattern shown by the solid line and the pattern shown by the broken line, it can be understood that input 4 differs and that the difference in input 4 has affected output 1 and output 3.

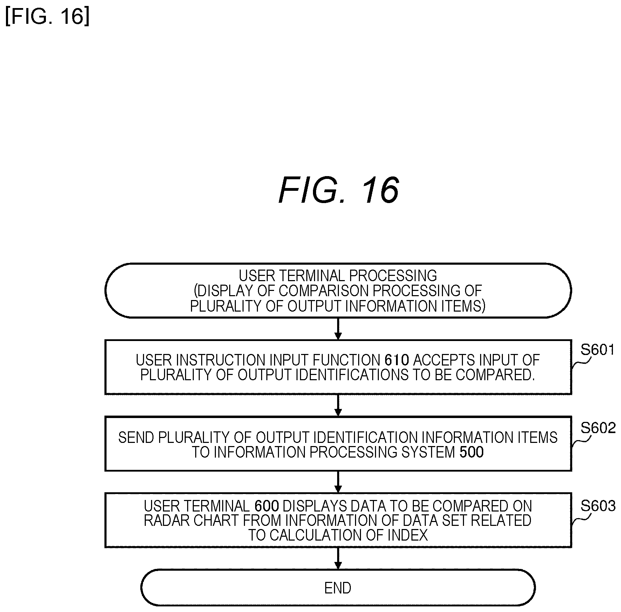

FIG. 16 is a flowchart illustrating a processing procedure of display processing of a plurality of indexes. The display processing of a plurality of indexes includes the following steps S601 to S603.

### Step S601

The user instruction input function 610 of the user terminal 600 accepts input of identification information of a plurality of outputs to be compared. Thereafter, the process proceeds to Step S602.

### Step S602

The user instruction input function 610 sends identification information of outputs to be compared to the information processing system 500. Thereafter, the process proceeds to Step S603.

### Step S603

The user terminal 600 displays, on a radar chart, data to be compared from information of a data set relating to calculation of the index, and terminates the processing.

Although a radar chart is illustrated in FIGS. 15 and 16, various indexes can be comparatively displayed in any format, such as a pie chart.

Display of information having a structure will be described below.

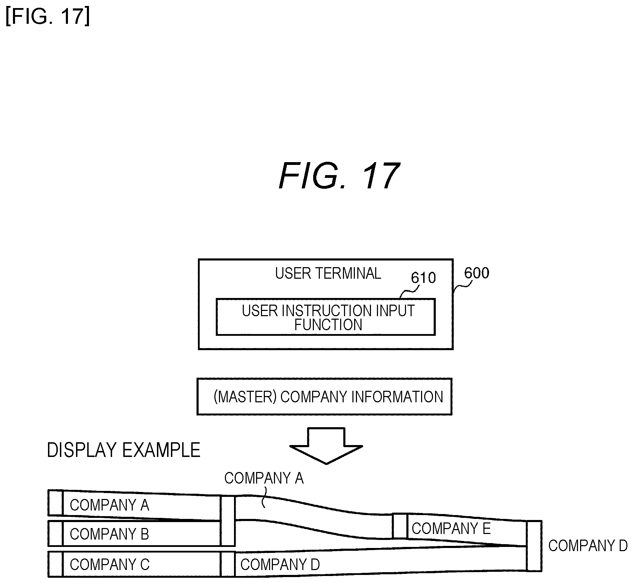

FIG. 17 is an explanatory diagram of display of company information.

Because enterprises repeatedly undergo mergers, company name changes, divisions, and the like, company information also needs to be displayed and checked as data having From-To relationships.

A display example of FIG. 17 indicates that company A, company B, and company C originally existed, company B was merged into company A, company C changed the company name to company D, company A changed the company name to company E, and company E was merged into company D.

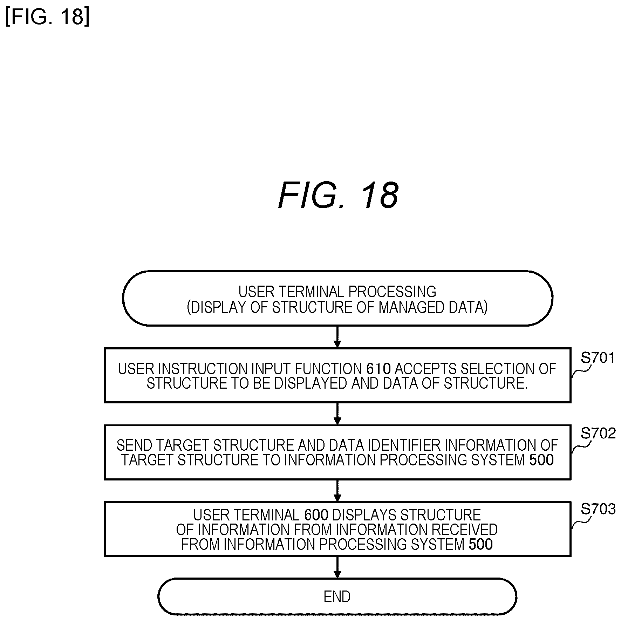

FIG. 18 is a flowchart illustrating a procedure of structure display processing. The structure display processing includes the following steps S701 to S703.

### Step S701

The user instruction input function 610 of the user terminal 600 accepts selection of a structure to be displayed and data of the structure. Thereafter, the process proceeds to Step S702.

### Step S702

The user instruction input function 610 sends, to the information processing system 500, a target structure and data identifier information of the target structure. Thereafter, the process proceeds to Step S703.

### Step S703

The user terminal 600 displays a structure of information based on information received from the information processing system 500 and terminates the processing.

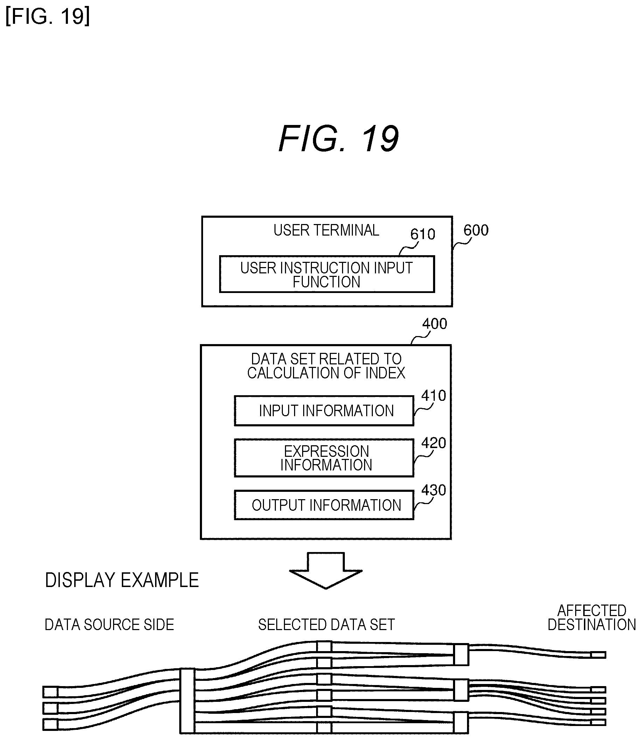

FIG. 19 is an explanatory diagram of data tracing. The information processing system 500 can recognize and specify output information and input information by identification names. Therefore, one data set can be designated, and data processing before and after the data set that is related to the data set can be displayed. For example, when identification names of output information and input information are hierarchically structured, tracing is possible by following the hierarchical structure.

FIG. 19 indicates that, with a selected data set as a reference, tracing is possible for a data source side (upstream side) and an affected destination side (downstream side).

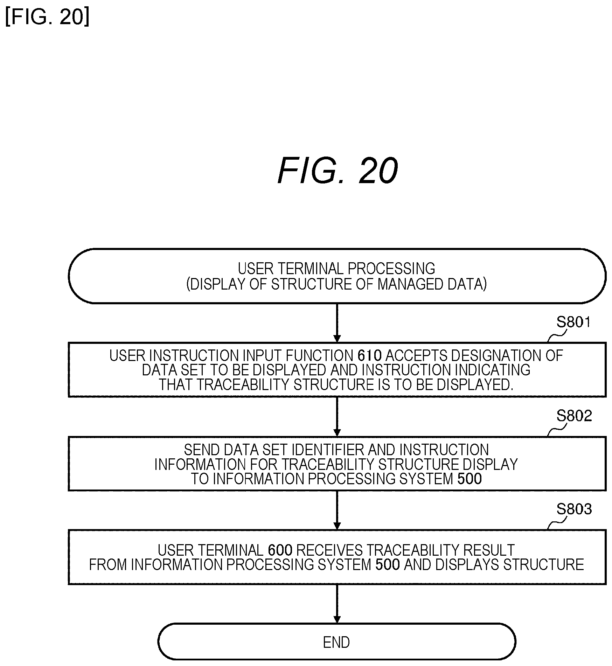

FIG. 20 is a flowchart illustrating a procedure of trace display processing of data. The trace display processing of data includes the following steps S801 to S803.

### Step S801

The user instruction input function 610 of the user terminal 600 accepts designation of a data set to be displayed and an instruction indicating that a traceability structure is to be displayed. Thereafter, the process proceeds to Step S802.

### Step S802

The user instruction input function 610 sends, to the information processing system 500, a data set identifier and instruction information for traceability structure display. Thereafter, the process proceeds to Step S803.

### Step S803

The user terminal 600 receives a traceability result from the information processing system 500, displays a structure, and terminates the processing.

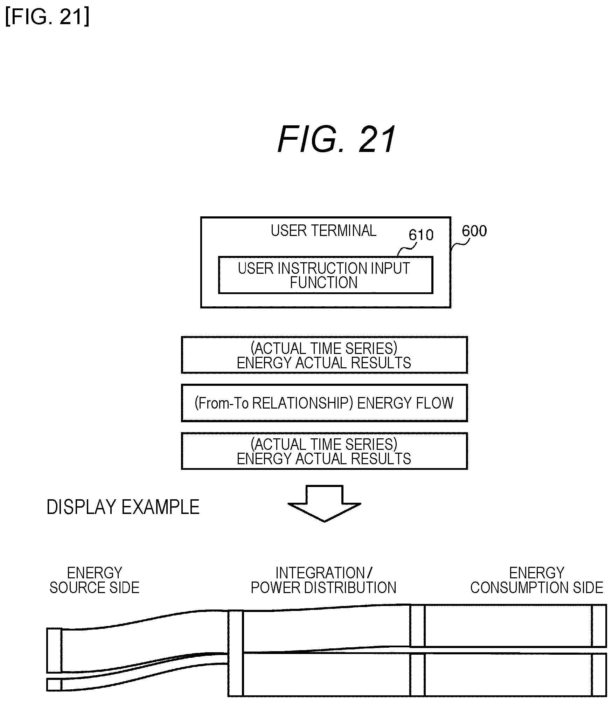

FIG. 21 is an explanatory diagram of a case of tracing a flow of energy. In this case, the user terminal 600 refers to energy actual results and a From-To relationship of energy flow and displays a structure of how supply is provided from an energy source to an energy consumption side while combination and power distribution are performed.

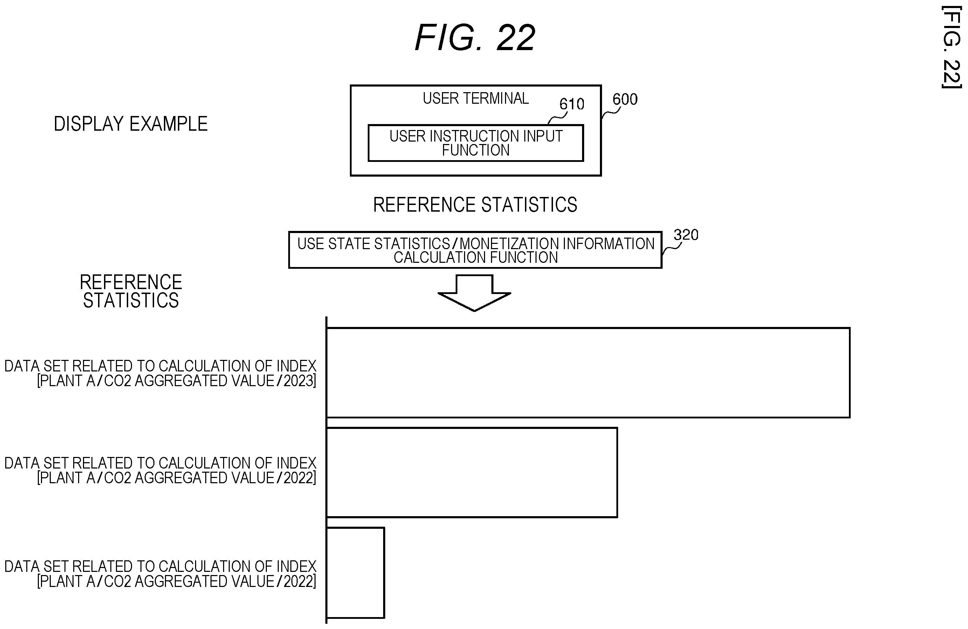

FIG. 22 is an explanatory diagram of display of use state statistics of a data set. In FIG. 22, the use state statistics/monetization information calculation function 320 graphically displays, for CO2 aggregated values, how much each data set is referred to. Specifically, the CO2 aggregated value of Plant A for 2023 is referred to most frequently, next the CO2 aggregated value of Plant A for 2022 is referred to, and next the CO2 aggregated value of Plant B for 2022 is referred to. In this manner, value of each data set can be evaluated by taking statistics of reference frequencies for the same index having different years or places.

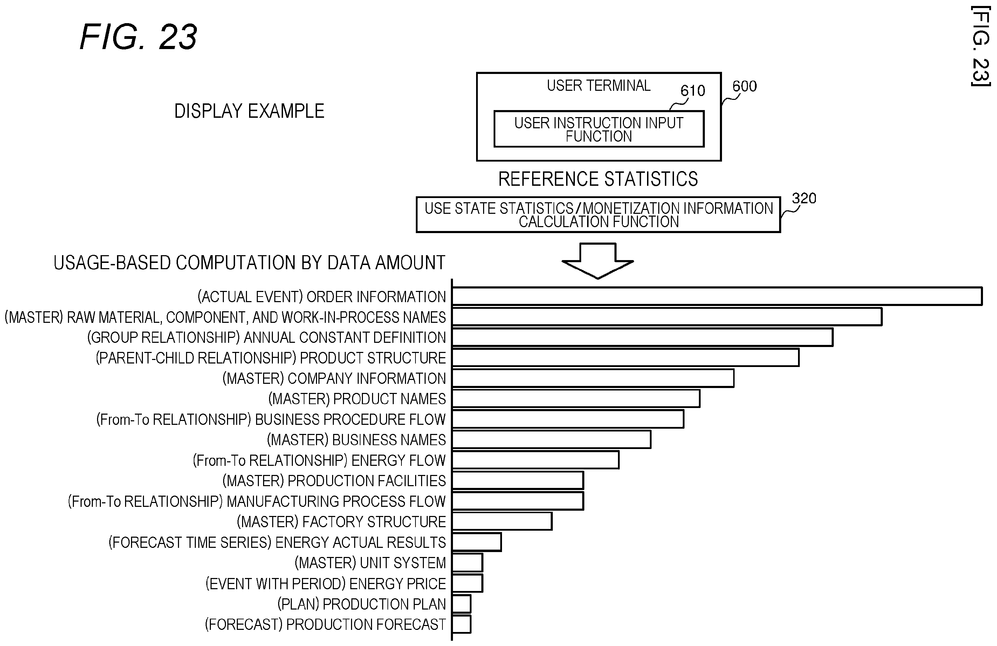

FIG. 23 is an explanatory diagram of an example in which usage-based information for monetization is calculated and displayed from a use amount of a data set.

In FIG. 23, the use state statistics/monetization information calculation function 320 takes, for various types of data, statistics in terms of data amounts indicating how much reference has been made. In this manner, importance for each data type can be evaluated by taking statistics of reference amounts of the respective data.

Note that, although the use amount is exemplified here, importance for each data type can be evaluated by using, as an index, any value such as an accumulated amount of data.

Next, the GX index will be described.

In recent years, promotion of energy saving has become an important issue.

In order to promote energy saving, for example, obligations such as "if the basic unit for the past 5 years could not be improved by an annual average of 1% or more, or if the basic unit could not be improved compared with the previous fiscal year, a report including a reason therefor is made" may be imposed on enterprises.

An energy consumption basic unit is used as an index for rationalization of energy use.

An energy consumption basic unit of a factory (hereinafter abbreviated as "factory energy basic unit") represents an amount of energy (input to the factory) used for producing a unit quantity of products (output of the factory). Further, a production quantity is considered to be proportional to an amount of energy effectively used for production of products in a production process. The energy basic unit can also be interpreted as a quantity proportional to a reciprocal of "energy efficiency of the factory". Therefore, if the energy basic unit of the factory decreases, energy efficiency of the factory increases.

The energy consumption basic unit used as an index of the "Energy Rationalization Judgment Criteria" is obtained by the following expression. [Math. 1] $\begin{matrix}Energy consumption \\ basic unit\end{matrix} = \frac{Energy consumption amount}{\begin{matrix}Production quantity , total floor area of building , or another \\ value having close relationship with energy usage amount\end{matrix}}$

"Production quantity and the like" in a denominator of the expression is defined as "a production quantity, a total floor area of a building, or another value having a close relationship with an amount of energy used".

In other words, there is room for discretion in a calculation method of the denominator. An enterprise that does not want a production quantity to leak outside may contemplate computation using another parameter such as total floor area. Further, because total floor area is also information relating to collateral when facility financing is carried out, there is a possibility that even bank personnel can calculate total floor area. That is, cases occur in which comparison is made by bank personnel computing from total floor area and by a corporate utilities department computing from an actually measured production quantity.

In this manner, even for the same index, cases may exist in which computation is performed based on different input values. The disclosed system enables accurate comparison of indexes by managing traceability and definitions of data.

"Amount of energy used" in a numerator of the expression is an amount of energy used by the factory. When a plurality of types of energy such as electric power and fuel are used, units must be unified when the plurality of types of energy are summed. As one policy, a value obtained by converting the amount of energy used into an amount of primary energy (calorific value and crude-oil-equivalent value) is used.

Primary energy refers to resources that generate energy (crude oil, coal, natural gas, etc.).

Secondary energy refers to energy in forms such as petroleum products (gasoline, kerosene, heavy oil, etc.), city gas, electric power, and heat, which are used by energy consumers such as factories and households. Secondary energy is also called final energy. Secondary energy is obtained by changing a form of primary energy in power generation and conversion sectors (power plants, petroleum refineries, etc.) so as to be convenient for use by consumers. In a process of converting energy, power generation losses and transmission losses occur in electric power systems, and refining losses occur in fuel systems.

In this manner, various converted values are used in a process of calculating an index, and calculation becomes complicated.

Granularity of calculation of the basic unit is also multistage and complex. When values of the respective outputs and comparison/evaluation of the values or consideration of improvement measures are carried out, it is desirable to be able to determine by what expressions and inputs the respective outputs have been output.

The disclosed system can evaluate, as a set, on the basis of what values the respective values have been computed.

Calculation of an energy basic unit in consideration of an inclusion structure of a factory will be described here.

Energy use states can be aggregated and managed monthly not only for an entire factory but also as basic units by product type, by department, by process, by equipment, and by lot. Improvement of the basic unit is preferably managed by breakdown into departments, processes, and ultimately major equipment.

A factory basic unit, a department basic unit, a process basic unit, and an equipment basic unit are obtained as follows. [Math. 2] $Factory basic unit = \frac{\left(Factory\right) energy consumption amount}{Factory production quantity}$ [Math. 3] $Department basic unit = \frac{\left(Factory/department\right) energy consumption amount}{Department production quantity}$ [Math. 4] $Process basic unit = \frac{\left(Factory/department/process\right) energy consumption amount}{Process production quantity}$ [Math. 5] $Equipment basic unit = \frac{\left(Factory/department/process/equipment\right) energy consumption amount}{Production quantity related to the equipment}$

As a specific example, computation of a pump equipment energy basic unit and a boiler will be described.

A basic unit of a cooling water pump attached to production equipment is expressed by the following expression. A pump power usage amount is used in a numerator, and a production quantity of production equipment to which the pump sends cooling water (= related production quantity) is used in a denominator. [Math. 6] $\begin{matrix}Pump equipment \\ energy basic unit\end{matrix} = \frac{Pump power usage amount}{Production quantity related to pump}$

In this case, by installing a flowmeter at a pump outlet, installing cooling water thermometers before and after the production equipment, and measuring "total cooling water flow rate" and "cooling heat quantity of the production equipment", the energy basic unit can be represented by the following expression. [Math. 7] $\begin{matrix}\begin{matrix}Pump equipment \\ energy basic unit\end{matrix} = \frac{Pump power usage amount}{Production quantity related to pump} \\ = \frac{Cooling heat quantity}{\begin{matrix}Production quantity \\ related to pump\end{matrix}} ⋅ \frac{\begin{matrix}Total flow rate \\ of pump\end{matrix}}{\begin{matrix}Cooling heat \\ quantity\end{matrix}} ⋅ \frac{\begin{matrix}Pump power \\ usage amount\end{matrix}}{\begin{matrix}Total flow rate \\ of pump\end{matrix}}\end{matrix}$

As described above, even when the same basic unit is computed, several types of computing methods can be provided by expanding the expression. The disclosed system enables comparison among the computing methods.

A basic unit focusing on fuel of boiler equipment is expressed by the following expression. A production quantity of production equipment to which the boiler sends steam (= related production quantity) is used in a denominator. A boiler fuel usage amount is used in a numerator. (Because attention is paid only to fuel as energy, the usage amount need not be converted into a crude-oil equivalent.) [Math. 8] $\begin{matrix}Basic unit of \\ boiler equipment\end{matrix} = \frac{Boiler fuel usage amount}{Production quantity related to boiler equipment}$

When the basic unit is broken down into two indexes using "steam amount", which is an output of the boiler, as an intermediary variable, the basic unit can be expressed by the following expression. [Math. 9] $\begin{matrix}\begin{matrix}Basic unit of \\ boiler equipment\end{matrix} = \frac{Boiler fuel usage amount}{Production quantity related to boiler equipment} \\ = \frac{Steam amount}{\begin{matrix}Production quantity related \\ to boiler equipment\end{matrix}} ⋅ \frac{Boiler fuel usage amount}{Steam amount}\end{matrix}$

For a first term, if a boiler steam generation amount is grasped using numerical values in a monthly operation report of the boiler or the like, a steam amount corresponding to a "steam basic unit of a production department" can be obtained. By dividing the steam amount by a production quantity related to the boiler maintenance, an amount of steam used to produce a unit quantity of products is represented. The first term is an index to be managed by the production department. A second term is what should be called a "boiler fuel basic unit" and represents an amount of fuel used to generate a unit quantity of steam. The second term is an index proportional to a reciprocal of boiler efficiency and is an index to be managed by a utilities department. By breaking down a "boiler equipment basic unit" into the two indexes, when the basic unit has increased, which index has increased can be checked, and a direction of specific improvement measures can be determined.

Note that the above expression corresponds to the expression information 420 in the data set 400. Further, a production quantity related to the boiler equipment, a boiler fuel usage amount, and a steam amount in the above expression correspond to the input information 410 in the data set 400. Further, a basic unit of the boiler equipment in the above expression corresponds to the output information 430 in the data set 400. The expression is one example of a calculation method according to a prescribed regulation, and a calculation method of a value of each item and the expression itself on the left are changeable.

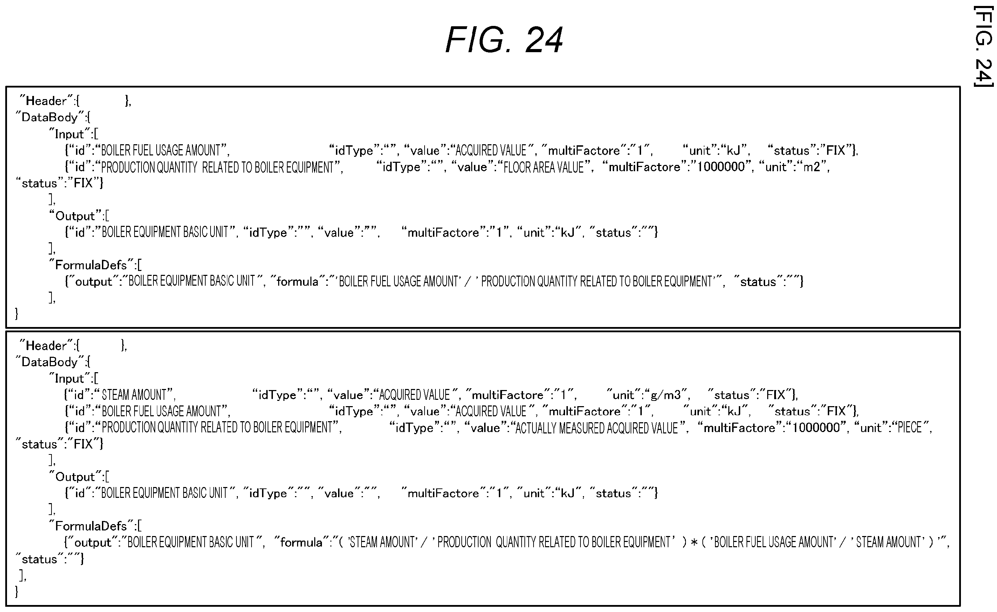

FIG. 24 is a specific example of a data set relating to calculation of a boiler equipment basic unit. FIG. 24 corresponds to the above expression and illustrates two patterns of a data set for calculating a boiler equipment basic unit.

One data set does not use a steam amount, assigns a floor area to a production quantity, and calculates a boiler equipment basic unit by 'boiler fuel usage amount'/'production quantity related to the boiler equipment'.

Another data set has a higher maturity level, uses a steam amount, and calculates a boiler equipment basic unit by ('steam amount'/'production quantity related to the boiler equipment')*('boiler fuel usage amount'/'steam amount').

Next, management indexes and environmental indexes will be described.

Net profit, which is a management index, and return on equity (ROE: equity ratio) are obtained as follows. 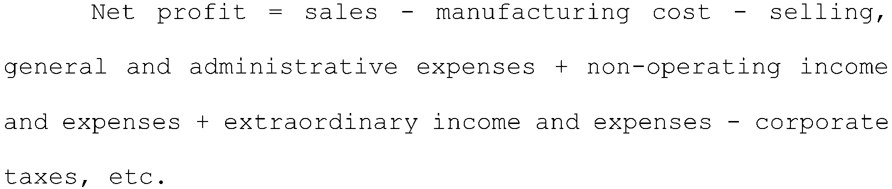 Net profit = sales - manufacturing cost - selling, general and administrative expenses + non-operating income and expenses + extraordinary income and expenses - corporate taxes, etc. $ROE = net profit / shareholders ′ equity$

Net profit is used for calculation of ROE. In this manner, the indexes are multistage, and net profit can be interpreted as an intermediate output.

As an environmental index, GHG emissions are exemplified. Here, a business operator in the manufacturing industry that manufactures the same type of product throughout a year, for example, duralumin made of aluminum + copper + magnesium as materials, is assumed.

A production quantity is obtained as follows. $\begin{matrix}Production quantity = ending inventory quantity - \\ beginning inventory quantity + sales quantity \\ = ending inventory quantity - beginning inventory \\ quantity + sales / average unit price of product\end{matrix}$

Assuming that a component composition of a product is (Al : Cu : Mg) = (a : b : c), GHG emissions (Scope 1), which are greenhouse gas emissions directly emitted by the business operator in fuel use and industrial processes, are expressed as follows. $\begin{matrix}\left(\begin{matrix}Al usage amount * emission basic unit + Cu usage \\ amount * emission basic unit\end{matrix}\right) \times production quantity \\ = \left(Al usage amount*1.49+Cu usage amount*4.49\right) \times \\ production quantity\end{matrix}$

The GHG emissions (Scope 1) are thus obtained.

Here, the production quantity can be roughly estimated from sales and an average unit price of the product as described above. Therefore, if a material composition or a component composition of a product is known, GHG emissions (Scope 1) can be calculated from information disclosed to investors and the like even when the business operator does not directly disclose the production quantity.

A material composition and a component composition correspond to the product structure shown in FIG. 4. In the example of duralumin, a parent-child relationship in which duralumin is a parent and aluminum, copper, and magnesium are children is registered in the product structure.

Further, relationships between a product name or identification information of a product and a general name or a chemical expression are managed by the master data of product names in FIG. 4.

The output state management function 220 has a "function of importing product name master data and product structure information", a "function of converting parent-child relationships into expressions", and a "function of inserting GX parameters", and calculates a GX index by these functions.

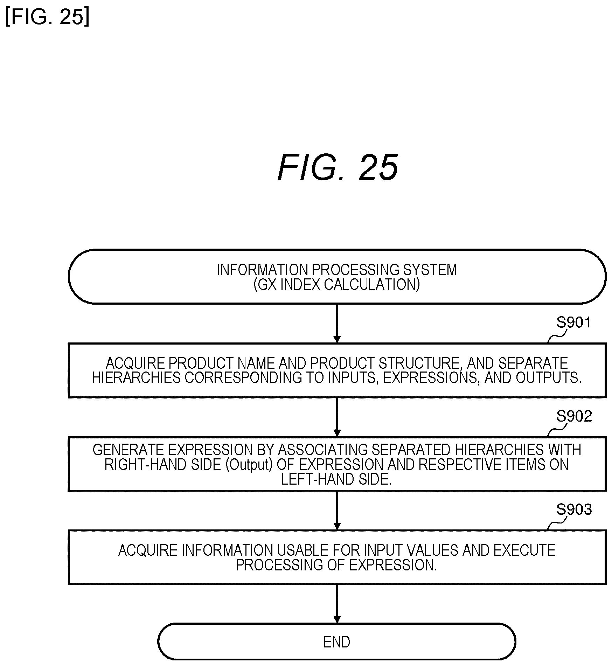

FIG. 25 is a flowchart of processing for calculating a GX index. The processing for calculating the GX index includes the following steps S901 to S903.

### Step S901

The output state management function 220 of the information processing system 500 acquires a product name and a product structure by the "function of importing product name master data and product structure information" and separates hierarchies corresponding to inputs, expressions, and outputs. Thereafter, the process proceeds to Step S902.

### Step S902

The output state management function 220 generates an expression by associating the separated hierarchies with the right-hand side (Output) of the expression and respective terms on the left-hand side by the "function of converting parent-child relationships into expressions". Thereafter, the process proceeds to Step S903.

### Step S903

The output state management function 220 acquires information usable for the input values by the "function of inserting GX parameters" and executes processing of the expression. Thereafter, the processing is terminated. Information usable for the input values includes not only information managed by the business operator but also substance names and the like stipulated by regulations and multipliers thereof.

In this manner, the information processing system 500 can acquire information in linkage with information of a prescribed department, such as information in financial statements for investors and product structure. As a result, necessary items and expression data can be automatically created from the product structure, and expressions and items created there can be traced, and therefore later understanding of grounds for values of the index becomes easy.

Further, each term of expression expansion can be expanded to each level such as by department, by process, and by equipment. Therefore, an input achievement degree at each level can be managed, and display output and the like are also possible as appropriate.

Further, even when names of indexes as outputs are the same, differences in expressions for calculation and in calculation of values of respective items of the expressions can be identified and visualized. For example, whether a standard value is used for a certain value or whether the certain value is cited from actual data of some department can be displayed.

As described above, the disclosed information processing system includes: an auxiliary storage device 1300 as a storage unit for storing a data set 400 that is related to calculation of a prescribed index, and has included therein, in association with one another, data of an input value necessary for computing the prescribed index, at least one structure of an expression for computing the prescribed index, and data of an output value which is a computing result of the prescribed index; and a CPU 1100 as a processing unit capable of outputting, on the basis of the data set, information related to the input value, the expression, or the output value, which are each associated with the prescribed index.

With this configuration and operation, retrospective verification of a calculation process of an index is enabled, that is, traceability for the calculation process of the index is achieved, whereby reliability of the index can be managed.

Further, the data set indicates a type of data of the input value, contents of processing performed using the input value, and a type of data of the output value, and when data of a type specified as the input value is obtained, the processing unit executes the processing using the data to obtain the output value, and the processing unit manages, in association, a value of data used as the input value, contents of the executed processing, and a value of the output value obtained as an execution result of the processing.

Therefore, values of inputs used for computation of the output value and contents of the processing can be verified afterward.

Further, the processing unit obtains a plurality of computing results for the same index by performing computations in which at least one of the value of data of the input value and the contents of the processing differs and the type of data of the output value is the same.

Further, the processing unit uses a first computing result and a second computing result for the same index, displays and outputs a difference between the first computing result and the second computing result in a comparable manner, and also displays and outputs an input value and/or contents of the processing relating to the first computing result and the second computing result.

Therefore, output values of the same type obtained through different processes can be compared.

Further, the processing unit generates an electronic signature from a combination of the value of data used as the input value, the contents of the executed processing, and the value of the output value obtained as the execution result of the processing, and adds the electronic signature to the combination.

Therefore, tampering with a computing process of the output value can be prevented.

Further, the data set distinguishes, among a plurality of input values, primary data that is an input value acquired from outside and secondary data that is an input value obtained from the primary data, and the processing unit outputs, together with the output value, a ratio of the primary data among the plurality of input values.

Therefore, the ratio of the primary data can be used for evaluation of the index.

Further, the processing unit sets stages, for different computing methods for obtaining the same index, according to the number of required input values, obtains the index by a computing method satisfying the required input values at the present time, and provides information of input values required for a computing method of a next stage.

Therefore, improvement of a maturity level can be supported.

Further, the processing unit starts the processing when a part of the input value has been obtained, manages progress information of the processing, and is capable of outputting an intermediate result of the processing.

Therefore, progress of the index can be checked as appropriate.

Further, the processing unit refers to a correspondence relationship between identification information of data acquirable from outside and identification information for uniquely specifying data within the data set, and converts data acquired from outside into data as the input value of the data set.

Further, the processing unit refers to a correspondence relationship between identification information for uniquely specifying data within the data set and a data format used by an output destination of the index, and converts a computing result of the index into the data format of the output destination and outputs the computing result.

Therefore, by managing reserved words capable of specifying, as a unique meaning, types of data managed in the database, and by combining the reserved words, uniqueness of meaning and data source with respect to data of the entire data set can be ensured.

Further, the processing unit manages a use result for the computing result of the index and evaluates a data set used for computation of the index based on the use result of the index.

Therefore, how much the data set has been referred to and used can be used as an evaluation index.

Note that the present invention is not limited to the above embodiments and includes various modifications. For example, the above embodiments have been described in detail in order to explain the present invention in an easily understandable manner, and the present invention is not necessarily limited to those including all configurations described above. Further, not only deletion of such configurations but also replacement and addition of configurations are possible.

### Reference Signs List

- 100: function of converting into computing process on basis of mathematical expression
- 200: input value state management function
- 210: expression executable state management function
- 220: output state management function
- 230: DBMS
- 300: use management function
- 400: data set
- 500: information processing system
- 600: user terminal
- 800: database
- 1000: computer
- 1100: CPU
- 1200: memory
- 1300: auxiliary storage device
- 1400: communication device
- 1500: input device
- 1600: output device

## Claims

1. An information processing system comprising: a storage unit for storing a data set that is related to calculation of a prescribed index, and has included therein, in association with one another, data of an input value necessary for computing the prescribed index, at least one structure of an expression for computing the prescribed index, and data of an output value which is a computing result of the prescribed index; and
a processing unit capable of outputting, on the basis of the data set, information related to the input value, the expression, or the output value, which are associated with the prescribed index.

2. The information processing system according to claim 1, wherein
the data set indicates a type of data of the input value, contents of processing performed using the input value, and a type of data of the output value,
the processing unit obtains the output value by executing the processing using the data when data of a type specified as the input value is obtained, and
the processing unit manages, in association, a value of data used as the input value, contents of the executed processing, and a value of the output value obtained as an execution result of the processing.

3. The information processing system according to claim 2, wherein
the processing unit obtains a plurality of computing results for the same index by performing computations in which at least one of the value of data of the input value and the contents of the processing differs and the type of data of the output value is the same.

4. The information processing system according to claim 3, wherein
the processing unit uses a first computing result and a second computing result for the same index,
displays and outputs, in a comparable manner, a difference between the first computing result and the second computing result, and
displays and outputs an input value and/or contents of the processing relating to the first computing result and the second computing result.

5. The information processing system according to claim 2, wherein
the processing unit generates an electronic signature from a combination of a value of data used as the input value, contents of the executed processing, and a value of the output value obtained as the execution result of the processing, and adds the electronic signature to the combination.

6. The information processing system according to claim 1, wherein
the data set distinguishes, for a plurality of input values, between primary data that is an input value acquired from outside and secondary data that is an input value obtained from the primary data, and
the processing unit outputs, together with the output value, a ratio of the primary data among the plurality of input values.

7. The information processing system according to claim 1, wherein
the processing unit sets stages, for different computing methods for obtaining the same index, according to the number of required input values, obtains the index by a computing method satisfying the required input values at a present time, and provides information of input values required for a computing method of a next stage.

8. The information processing system according to claim 2, wherein
the processing unit starts the processing when a part of the input value has been obtained, manages progress information of the processing, and is capable of outputting an intermediate result of the processing.

9. The information processing system according to claim 1, wherein
the processing unit refers to a correspondence relationship between identification information of data acquirable from outside and identification information for uniquely specifying data within the data set, and converts data acquired from outside into data as the input value of the data set.

10. The information processing system according to claim 1, wherein
the processing unit refers to a correspondence relationship between identification information for uniquely specifying data within the data set and a data format used by an output destination of the index, and converts the computing result of the index into the data format of the output destination and outputs the computing result.

11. The information processing system according to claim 1, wherein
the processing unit manages a use result for the computing result of the index and evaluates the data set used for computation of the index based on the use result of the index.

12. An index calculation method in which an information processing system refers to a data set relating to calculation of a prescribed index, the data set having associated therewith data of an input value necessary for computing the prescribed index, at least one structure of an expression for computing the prescribed index, and data of an output value which is a computing result of the prescribed index, the index calculation method comprising:
acquiring the input value;
executing processing indicated by the expression;
using, as output values, an intermediate result and/or a final result of execution of the processing; and
saving, in association, an acquisition result of the input value, an execution result of the processing, and output values as the intermediate result and/or final result.
